# FASCICULE DE BREVET EUROPEEN

(11) **EP 0 441 712 B1**
(45) Date de publication et mention de la délivrance du brevet: **18.01.1995**
(21) Numéro de dépôt: 91400313.2
(22) Date de dépôt: 08.02.1991
(51) Int. Cl.: H04L 27/20, G01S 7/02, G01S 13/02, G06K 7/10

(54) **Système répondeur à hyperfréquence ayant une antenne plane résonante et polarisante**
Mikrowellentranspondersystem mit ebener abgestimmter polarisierender Antenne
Microwave transponder system with polarising resonant plane antenna

(30) Priorité: 09.02.1990 FR 9001537
(43) Date de publication de la demande: 14.08.1991
(73) Titulaire: COMPAGNIE DES SIGNAUX, F-75017 Paris (FR)
(72) Inventeur: Meunier, Christian, F-78400 Chatou (FR)
(74) Mandataire: Chameroy, Claude

(56) Documents cités:
- EP-A- 0 343 034
- ELECTRONICS LETTERS. vol. 24, no. 21, 13 octobre 1988, ENAGE GB pages 1347 -1348; K. Chang et al.: "Active Radiating Element using FET Source Integrated with Microstrip Patch Antenna"
- MICROWAVE JOURNAL. vol. 32, no. 6, juin 1989, DEDHAM US pages 26 - 42; H.Bierman: "Innovative Circuit Arrangements and Device Designs Provide High Performance RF and mm-Wave Sources for Military Applications"
- IEEE International Solid State Circuits Conference, 15 fevrier 1979,Pennsylvania, US, Vol. XXII, pages 164 - 165, IEEE New York, US; Wei C. Tsai et al. "PSK Modulator using Dual-Gate FETs"
- PATENT ABSTRACTS OF JAPAN vol. 6, no. 21 (E-93)(899) 06 février 1982,& JP-A-56 141605 (NIPPON DENSHIN DENWA KOSHA) 05 novembre 1981,

## Description

La présente invention concerne un système hyperfréquence de transmission de données à distance, du type comprenant au moins un lecteur associé à une pluralité de répondeurs, le lecteur comportant des moyens pour engendrer une onde hyperfréquence ayant une certaine polarisation rectiligne, tandis que chaque répondeur est muni d'une antenne plane rectangulaire de réémission apte à recevoir ladite onde hyperfréquence et à la réémettre suivant une polarisation orthogonale avec une modulation de phase à deux états représentant les informations à transmettre au lecteur (c.f. par exemple document EP-A- 0 343 034).

De tels systèmes présentent de nombreuses applications, notamment dans le cas où l'un des éléments, lecteur ou répondeur, est porté par un mobile susceptible de se déplacer à très grande vitesse. Parmi ces applications, on peut citer par exemple l'identification de véhicules ferroviaires ou routiers, le péage autoroutier sans contact, le contrôle d'accès, ou encore la localisation ferroviaire.

Malheureusement, les systèmes connus de ce type sont à l'heure actuelle beaucoup trop coûteux pour pouvoir être utilisés de manière industrielle. En effet, les différentes applications envisagées nécessitent un grand nombre de répondeurs. Ceux-ci doivent donc rester très simples pour être d'un prix abordable, ce qui ne permet pas en particulier d'utiliser les modulateurs de phase classiques.

La présente invention a pour but principal de remédier à cet inconvénient et, pour ce faire, elle a pour objet un système de transmission de données du type susmentionné qui se caractérise essentiellement en ce que la modulation de phase est obtenue au moyen de deux transistors connectés respectivement à deux coins adjacents de l'antenne, ces deux transistors étant alternativement bloqués et saturés au rythme des informations à transmettre, par des signaux de commande complémentaires issus d'une unité de traitement appropriée, afin de court-circuiter alternativement le coin correspondant de l'antenne.

Grâce à cette disposition et ainsi qu'on le verra plus clairement par la suite, on obtient de façon très simple une modulation de phase à deux états de l'onde hyperfréquence réémise dans une polarisation orthogonale.

De préférence, l'antenne plane du répondeur est réalisée sous forme de circuit imprimé sur un substrat isolant dont le verso entièrement métallisé constitue un plan de référence.

Dans une forme de réalisation particulière de l'invention, les deux transistors sont constitués par des transistors bipolaires dont la jonction émetteur-collecteur est connectée entre le coin correspondant de l'antenne et le plan de référence, et dont la base est reliée à l'unité de traitement.

Ainsi, la modulation de phase est obtenue au moyen de deux composants tout à fait classiques de faible coût.

Avantageusement, l'antenne plane du répondeur est de forme carrée et comporte en son centre un trou métallisé reliant électriquement la face active de l'antenne au plan de référence situé au verso, ce qui permet d'éliminer rapidement les charges statiques des jonctions des deux transistors.

De préférence également, le lecteur comporte des moyens pour moduler en amplitude l'onde hyperfréquence engendrée, tandis que le répondeur comporte une seconde antenne plane dite de réception associée à un élément non linéaire de détection, la détection par le répondeur de cette modulation d'amplitude provoquant l'activation de l'unité de traitement.

Ceci permet de ménager la source d'énergie du répondeur qui reste ainsi passif en l'absence de lecteur à portée de réception.

Par ailleurs, le lecteur comporte en outre des moyens pour moduler en impulsion l'onde hyperfréquence engendrée, afin de transmettre des informations déterminées au répondeur.

On peut ainsi inscrire un message dans une zone mémoire destinataire du répondeur, ou commander la transmission des informations qui se trouvent dans une zone mémoire déterminée du répondeur.

Dans une forme de réalisation particulière de l'invention, l'élément non linéaire de détection est constitué par une diode Schottky.

Une forme d'exécution de l'invention est décrite ci-après à titre d'exemple, en référence aux dessins annexés dans lesquels :
- la figure 1 représente de manière très simplifiée un système de transmission de données à distance conforme à l'invention ;
- la figure 2 est une vue en coupe montrant la structure de l'antenne de réémission du répondeur ;
- la figure 3 est un schéma synoptique du lecteur ; et
- les figures 4 et 5 sont des schémas explicitant le principe de la modulation de phase conforme à l'invention.

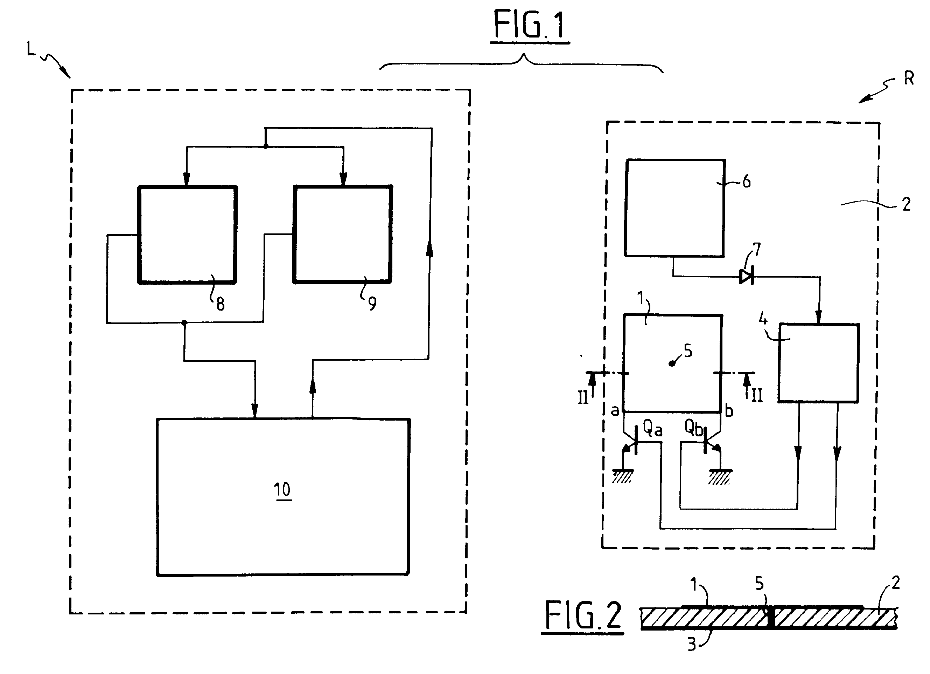

Le système de transmission de données représenté sur la figure 1 se compose d'au moins un lecteur tel que L, associé à une pluralité de répondeurs R dont un seul a été représenté ici. De façon connue en soi, le lecteur L comporte des moyens qui seront décrits plus en détail par la suite pour engendrer une onde hyperfréquence ayant une certaine polarisation rectiligne, par exemple une polarisation verticale, tandis que le répondeur R réémet ladite onde hyperfréquence dans une polarisation orthogonale, soit ici une polarisation horizontale, avec une modulation de phase à deux états représentant les informations à transmettre au lecteur L.

A cet effet, le répondeur R comprend tout d'abord une antenne plane carrée dite de réémission 1. Ainsi qu'on peut le voir plus clairement sur la figure 2, cette antenne 1 est réalisée sous forme de circuit imprimé sur un substrat isolant 2, par exemple en verre époxy, dont le verso entièrement métallisé constitue un plan de référence 3.

Conformément à l'invention, deux coins adjacents a et b de l'antenne 1 sont reliés à la masse, matérialisée par le plan de référence 3, par l'intermédiaire de la jonction émetteur-collecteur d'un transistor bipolaire, respectivement Qₐ et Q_{b}. Ces deux transistors sont alternativement bloqués et saturés au rythme des informations à transmettre par des signaux de commande complémentaires appliqués sur leur base et issus d'une unité de traitement appropriée 4. L'unité de traitement comprend une partie analogique et une partie logique constituée principalement d'une mémoire vive partagée en zones.

Par ailleurs, l'antenne 1 est pourvue en son centre d'un trou 5 métallisé reliant électriquement la face active de l'antenne au plan de référence 3 situé au verso, ce qui permet d'éliminer plus rapidement les charges statiques présentes dans les jonctions des transistors Qₐ et Q_{b}.

Dans la pratique, l'onde hyperfréquence engendrée par le lecteur L est modulée en amplitude. En fait, deux modulations sont utilisées. L'une permanente, sinusoïdale et de faible taux, par exemple 10 %, sert à "réveiller" le répondeur R afin que celui-ci ne consomme de l'énergie qu'en présence du lecteur L. L'autre modulation, en tout ou rien, est destinée à transmettre des informations ou des ordres à destination du répondeur.

La modulation d'amplitude permanente ne perturbe pas le lecteur et on peut la négliger. En revanche, en présence de modulation par impulsion tout ou rien, la lecture est interrompue, bien que le répondeur R continue à moduler en phase l'onde hyperfréquence reçue.

Pour détecter la modulation d'amplitude de l'onde hyperfréquence émise par le lecteur L, le répondeur R est équipé d'une seconde antenne plane carrée 6, dite de réception, réalisée de la même manière que l'antenne de réémission 1. Cette antenne 6 est associée à un élément non linéaire de détection 7, constitué ici par une diode Schottky, dont la sortie est reliée à l'unité de traitement 4.

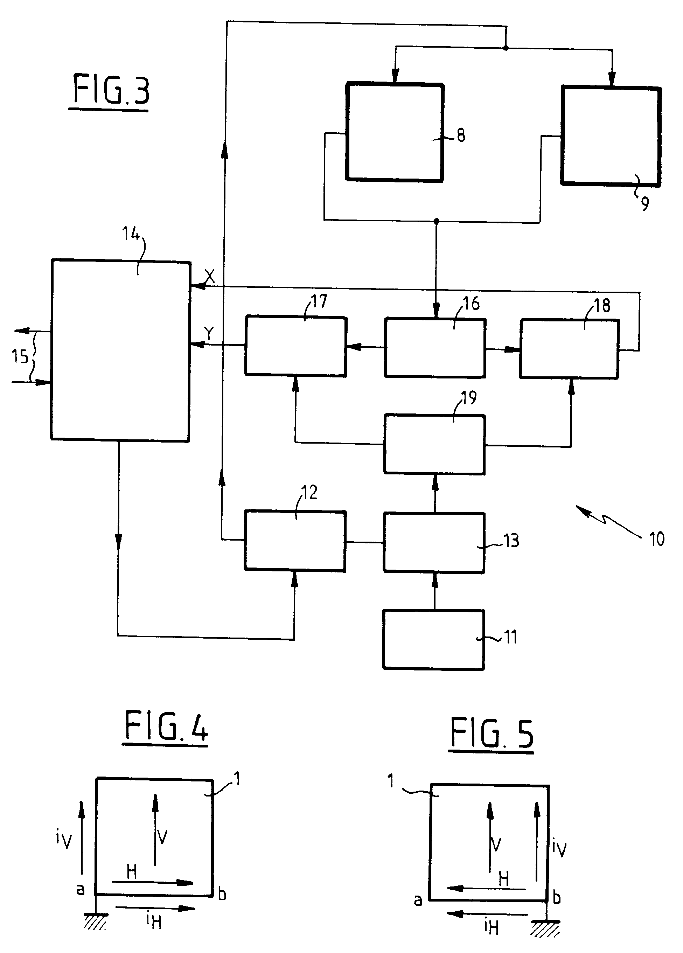

Le lecteur L est essentiellement constitué de deux antennes planes carrées 8 et 9, associées à un circuit 10 représenté en détail sur la figure 3. Ce circuit comprend tout d'abord une source hyperfréquence 11, par exemple à 2,45 GHz, attaquant un modulateur 12 par l'intermédiaire d'un coupleur directif 13. Le modulateur 12 reçoit la modulation désirée, c'est-à-dire la modulation permanente sinusoïdale, par exemple 1 kHz, ou les signaux logiques contenant les informations à transmettre au répondeur R, d'un circuit de traitement du signal 14 communiquant avec l'extérieur par des liaisons 15.

La sortie du modulateur 12 est appliquée à des accès verticaux des deux antennes 8 et 9, ce qui crée un champ hyperfréquence de polarisation rectiligne verticale. Cet ensemble de deux antennes planes forme un réseau dont la caractéristique est de donner à l'antenne ainsi constituée un diagramme dont l'ouverture est de 85° dans le plan vertical et de 60° dans le plan horizontal. Bien entendu, la constitution d'un autre réseau permettrait d'obtenir des ouvertures différentes, selon les applications envisagées. On notera en outre que ces antennes sont réalisées de la même manière que les antennes du répondeur, c'est-à-dire sous forme de circuit imprimé selon la technologie micro-ruban.

Les accès horizontaux des antennes 8 et 9 sont couplés en 16 et la somme est appliquée à deux détecteurs synchrones 17 et 18. Une partie de l'énergie de la source hyperfréquence 11 est prélevée au moyen du coupleur 13 pour être appliquée sur l'entrée oscillateur local des deux détecteurs synchrones 17 et 18 par l'intermédiaire d'un déphaseur π/2 19. On obtient ainsi en sortie deux signaux X et Y qui sont appliqués au circuit de traitement du signal 14 et qui représentent les informations transmises par le répondeur R en modulation de phase.

On va maintenant décrire plus en détail le fonctionnement du système de transmission de données conforme à l'invention.

Le lecteur L envoie une onde hyperfréquence de polarisation verticale, modulé en permanence par une modulation d'amplitude à 1 kHz de faible taux. Lorsque le répondeur R se trouve dans le champ du lecteur L, il détecte cette modulation à 1 kHz par l'intermédiaire de l'antenne de réception 6 et de la diode Schottky 7, ce qui "réveille" la partie logique de l'unité de traitement 4 et l'interface entre le signal détecté par l'antenne de réception 6 et l'entrée numérique de la partie logique. La partie logique transmet alors aux transistors Qₐ et Q_{b} deux signaux complémentaires représentant les informations d'une zone mémoire déterminée.

Les transistors Qₐ et Q_{b} sont ainsi alternativement bloqués et saturés par ces signaux complémentaires au rythme des informations à transmettre. Dans la pratique, chacun des transistors est relié au coin correspondant de l'antenne 1 par une ligne réalisée en micro-ruban dont le longueur est égale à un quart d'onde (λ/4).

Le transistor saturé présente une impédance très faible que l'on peut assimiler à 0, mais la liaison quart d'onde au coin correspondant de l'antenne 1 effectue une transformation en 1/Z, soit une très grande impédance. Réciproquement, le transistor bloqué présente une très grande impédance que l'on peut assimiler à l'infini, mais la liaison quart d'onde au coin correspondant de l'antenne 1 effectue également une transformation en 1/Z, soit une impédance voisine de 0. L'impédance des lignes quart d'onde reliant a à Qₐ et b à Q_{b} est choisie de façon à assurer la transformation en 1/Z dans les meilleures conditions de rendement.

Supposons par exemple, comme représenté sur la figure 4, que l'on établisse un court-circuit entre le coin a de l'antenne 1 et le plan de référence. On notera que dans ce type d'antenne, les parties actives sont localisées sur les bords. L'antenne est soumise au champ hyperfréquence de polarisation verticale V engendrée par le lecteur L et ce champ crée un courant i_{V}. Par suite un courant i_{H} est généré sur le bord adjacent de l'antenne afin d'annuler le courant au point de court-circuit a. Ce courant i_{H} crée à son tour un champ H orthogonal au champ V reçu et de même module aux pertes près.

Si l'on déplace maintenant le court-circuit au point b de l'antenne, comme représenté sur la figure 5, on voit que le champ orthogonal H change de signe.

Les deux transistors Qₐ et Q_{b} permettent donc d'obtenir très facilement une modulation de phase à deux états O-π de l'onde hyperfréquence réémise en polarisation horizontale, représentant les informations à transmettre au lecteur L. On notera que ces transistors sont des composants tout à fait classiques et peu coûteux puisqu'ils doivent simplement être capables de commuter la fréquence de travail, soit 2,45 GHz dans l'application envisagée ici.

Le lecteur L décode le message reçu du répondeur R dans le circuit de traitement 14 et émet alors éventuellement avec une modulation tout ou rien par impulsion. Cette modulation par impulsion permet de transmettre au répondeur R, soit une demande de transmission des informations contenues dans une autre zone mémoire du répondeur, soit un ordre de modification du contenu d'une zone mémoire déterminée.

A la réception de la modulation tout ou rien, le répondeur R peut, selon les cas, transmettre les informations contenues dans la zone mémoire choisie, ou inscrire un message dans la zone mémoire destinataire.

Le système de transmission de données qui vient d'être décrit présente donc en définitive une très grande souplesse d'utilisation et le faible coût du répondeur permet d'envisager des applications très variées, notamment dans le domaine ferroviaire.

## Revendications

1. Système hyperfréquence de transmission de données à distance, du type comprenant au moins un lecteur (L) associé à une pluralité de répondeurs (R), le lecteur (L) comportant des moyens pour engendrer une onde hyperfréquence ayant une certaine polarisation rectiligne, tandis que chaque répondeur (R) est muni d'une antenne plane rectangulaire de réémission (1)apte à recevoir ladite onde hyperfréquence et à la réémettre suivant une polarisation orthogonale avec une modulation de phase à deux états représentant les informations à transmettre au lecteur (L), caractérisé en ce que la modulation de phase est obtenue au moyen de deux transistors (Qₐ, Q_{b}) connectés respectivement à deux coins adjacents (a, b) de l'antenne (1), ces deux transistors étant alternativement bloqués et saturés au rythme des informations à transmettre, par des signaux de commande complémentaires issus d'une unité de traitement appropriée (4), afin de court-circuiter alternativement le coin correspondant de l'antenne.

2. Système selon la revendication 1, caractérisé en ce que l'antenne plane (1) du répondeur (R) est réalisée sous forme de circuit imprimé sur un substrat isolant (2) dont le verso entièrement métallisé constitue un plan de référence (3).

3. Système selon la revendication 2, caractérisé en ce que les deux transistors (Qₐ, Q_{b}) sont constitués par des transistors bipolaires dont la jonction émetteur-collecteur est connectée entre le coin correspondant (a, b) de l'antenne (1) et le plan de référence (3), et dont la base est reliée à l'unité de traitement (4).

4. Système selon la revendication 3, caractérisé en ce que l'antenne plane (1) du répondeur (R) est de forme carrée et comporte en son centre un trou métallisé (5) reliant électriquement la face active de l'antenne au plan de référence (3) situé au verso.

5. Système selon l'une quelconque des revendications 1 à 4, caractérisé en ce que le lecteur (L) comporte des moyens (12, 14) pour moduler en amplitude l'onde hyperfréquence engendrée, tandis que le répondeur (R) comporte une seconde antenne plane (6) dite de réception associée à un élément non linéaire de détection (7), la détection par le répondeur de cette modulation d'amplitude provoquant l'activation de l'unité de traitement (4).

6. Système selon la revendication 5, caractérisé en ce que le lecteur (L) comporte en outre des moyens (12, 14) pour moduler en impulsion l'onde hyperfréquence engendrée, afin de transmettre des informations déterminées au répondeur (R).

7. Système selon la revendication 5 ou 6, caractérisé en ce que l'élément non linéaire de détection (7) est constitué par une diode Schottky.

## Patentansprüche

1. Höchstfrequenz-System zur Fernübertragung von Daten des Typs mit wenigstens einem Leser (L), der mit einer Vielzahl von Empfängern (R) verbunden ist, wobei der Leser (L) Mittel zur Erzeugung einer Hochfrequenzwelle mit einer bestimmten geradlinigen Polarisation aufweist, während jeder Empfänger (R) mit einer rechteckigen ebenen Wiederausstrahlungsantenne (1) zum Empfang der Hochfrequenzwelle und zu deren Wiederausstrahlung gemäß einer orthogonalen Polarisation mit einer Phasenmodulation mit zwei Zuständen versehen ist, welche die an den Leser (L) zu übermittelnden Informationen darstellen, dadurch gekennzeichnet, daß die Phasenmodulation mittels zweier Transistoren (Qa, Qb) erhalten wird, die mit zwei benachbarten Ecken (a, b) der Antenne (1) verbunden sind, wobei diese beiden Transistoren in der Taktfrequenz der zu übermittelnden Informationen alternativ gesperrt und gesättigt sind durch komplementäre Befehlssignale, welche von einer geeigneten Verarbeitungseinheit (4) geliefert werden, damit die entsprechende Ecke der Antenne alternativ kurzgeschlossen wird.

2. System nach Anspruch 1, dadurch gekennzeichnet, daß die ebene Antenne (1) des Empfängers (R) realisiert ist in der Ausbildung einer gedruckten Schaltung auf einem Isolierträger (2), dessen vollständig metallisierte Rückseite eine Bezugsebene (3) bildet.

3. System nach Anspruch 2, dadurch gekennzeichnet, daß die beiden Transisitoren (Qa, Qb) mit bipolaren Transisitoren ausgebildet sind, deren Emitter-Kollektor-Verbindung zwischen die entsprechende Ecke (a,b) der Antenne (1) und die Bezugsebene (3) geschaltet und deren Basis mit der Verarbeitungseinheit (4) verbunden ist.

4. System nach Anspruch 3, dadurch gekennzeichnet, daß die ebene Antenne (1) des Empfängers (R) quadratisch ausgebildet ist und in der Mitte ein metallisiertes Loch (5) aufweist, welches die aktive Seite der Antenne mit der auf der Rückseite befindlichen Bezugsebene (3) verbindet.

5. System nach einem der Ansprüche 1 bis 4, dadurch gekennzeichnet, daß der Leser (L) Mittel (12,14) für eine Amplitudenmodulation der erzeugten Hochfrequenzwelle aufweist, während der Empfänger (R) eine besagte zweite ebene Antenne (6) für den Empfang aufweist, die mit einem nichtlinearen Erfassungselement (7) verbunden ist, wobei die Erfassung dieser Amplitudenmodulation durch den Empfänger die Aktivierung der Verarbeitungseinheit (4) auslöst.

6. System nach Anspruch 5, dadurch gekennzeichnet, daß der Leser (L) außerdem Mittel (12, 14) für eine Impulsmodulation der erzeugten Hochfrequenzwelle aufweist, um die bestimmten Information an den Empfänger (R) zu übermitteln.

7. System nach Anspruch 5 oder 6, dadurch gekennzeichnet, daß das nichtlineare Erfassungselement (7) durch eine Schottky-Diode gebildet ist.

## Claims

1. UHF system for the long-distance transmission of data, of the type comprising at least one reader (L) associated with a plurality of transponders (R), the reader (L) having means for generating a UHF wave with a certain rectilinear polarisation, whilst each transponder (R) is equipped with a flat rectangular retransmission antenna (1) suitable for receiving the said UHF wave and retransmitting it in an orthogonal polarisation with a two-state phase modulation representing the information to be transmitted to the reader (L), characterised in that the phase modulation is obtained by means of two transistors (Qₐ, Q_{b}) connected respectively to two adjacent corners (a, b) of the antenna (1), these two transistors being blocked and saturated in alternation at the rate of the information to be transmitted, by complementary control signals from a suitable processing unit (4), in order to short-circuit the corresponding corner of the antenna in alternation.

2. System according to Claim 1, characterised in that the flat antenna (1) of the transponder (R) is produced in the form of a printed circuit on an insulating substrate (2), the fully metallised reverse of which constitutes a reference plane (3).

3. System according to Claim 2, characterised in that the two transistors (Qₐ, Q_{b}) consist of bipolar transistors on which the emitter/collector junction is connected between the corresponding corner (a, b) of the antenna (1) and the reference plane (3) and the base is connected to the processing unit (4).

4. System according to Claim 3, characterised in that the flat antenna (1) of the transponder (R) is square in shape and has at its centre a metallised hole (5) electrically connecting the active face of the antenna to the reference plane (3) situated on the reverse.

5. System according to any one of Claims 1 to 4, characterised in that the reader (L) has means (12, 14) for amplitude-modulating the UHF wave generated, whilst the transponder (R) has a second flat antenna (6) known as the reception antenna associated with a non-linear detection element (7), the detection of this amplitude modulation, by the transponder, causing the activation of the processing unit (4).

6. System according to Claim 5, characterised in that the reader (L) also has means (12, 14) for pulse-modulating the UHF wave generated, in order to transmit given information to the transponder (R).

7. System according to Claim 5 or 6, characterised in that the non-linear detection element (7) consists of a Schottky diode.
